# EUROPÄISCHE PATENTANMELDUNG

(11) **EP 3 196 860 A2**
(43) Veröffentlichungstag der Anmeldung: **26.07.2017**
(21) Anmeldenummer: 16204433.3
(22) Anmeldetag: 15.12.2016
(51) Int. Cl.: G08G 1/16, B60W 40/06, G01S 13/95, G01S 13/93, G01N 21/55

(54) **VORRICHTUNG UND VERFAHREN ZUR ERKENNUNG EINES METALLISCHEN GEGENSTANDS**

(30) Priorität: 20.01.2016 DE 102016200687
(71) Anmelder: Robert Bosch GmbH, 70442 Stuttgart (DE)
(72) Erfinder: Schnee, Jan, 71093 Weil Im Schoenbuch (DE); Altenburg, Sven, 72581 Dettingen (DE); Doster, Micha, 72766 Reutlingen (DE); Dauer, Felix, 72793 Pfullingen (DE)

(57) **Zusammenfassung**

Mit der vorliegenden Erfindung wird eine Vorrichtung und ein Verfahren beansprucht, bei dem ein metallischer Gegenstand (110) auf oder oberhalb einer Fahrbahn erkannt wird, welcher sich in Fahrtrichtung eines Fahrzeugs (100), z.B. eines Zweirads, befindet. Dabei sollen nicht nur metallische Gegenstände (110) erkannt werden, die ein Hindernis, welches das Passieren der entsprechenden Stelle durch das Fahrzeug behindert, darstellen, sondern auch metallische Objekte, die ein Überfahren zunächst erlauben, jedoch aufgrund ihrer üblicherweise sehr glatten Oberfläche zu einer Gefährdung des Fahrzeugs führen können. So können als metallische Gegenstände beispielsweise sowohl oberhalb der Fahrbahn gespannte Drähte als auch ein in die Fahrbahn eingelassener metallischer Gegenstand, beispielweise ein Straßenbahngleis oder ein Kanaldeckel, erkannt werden. Das Erkennen des metallischen Gegenstands (110) erfolgt dabei über die Erfassung von Zustandsinformationen der Fahrbahn sowie des Bereichs oberhalb er Fahrbahn, jeweils in Fahrtrichtung. Hierdurch kann erkannt werden, ob sich auf oder oberhalb der Fahrbahn ein metallischer Gegenstand befindet (110). In Abhängigkeit eines derartigen für die Fahrt gefährlichen Objekts wird eine Warnung an den Fahrer des Fahrzeugs ausgelöst.

## Beschreibung

Die Erfindung betrifft eine Vorrichtung sowie ein Verfahren zur Erkennung einer Gefahrensituation, verursacht durch ein oder mehrere metallische Objekte auf oder oberhalb einer Fahrbahn in Fahrtrichtung eines Fahrzeugs.

### Stand der Technik

Bei der Fahrt mit einem Fahrzeug, insbesondere mit einem Zweirad, stellen auf oder oberhalb der Fahrbahn befindliche Objekte aus Metall eine nicht zu unterschätzende Gefahr da. So kann z.B. das Überqueren von Kanalisationsdeckel oder Eisenbahngleisen, insbesondere bei Feuchtigkeit (aber auch generell) aufgrund der glatten Oberfläche zu Stürzen führen. Außerdem gibt es auch immer öfter Vorfälle mit Drahtfallen, welche im Zusammenhang mit Fahrradfahrern installiert werden.

Um eventuelle Gefahren durch Hindernisse um ein Fahrzeug anzuzeigen, sind im Stand der Technik Parkassistenten bekannt, bei denen mittels Kamera und/oder Radar- bzw. Ultraschallsensoren die Umgebung erfasst werden. Die so erfassten Informationen über die Umgebung können dann mittels eines Displays dem Fahrer angezeigt werden. Hierbei können die Hindernisse graphisch, beispielsweise durch Farben, oder auch akustisch hervorgehoben werden, um den Fahrer aufmerksam zu machen.

### Offenbarung der Erfindung

Mit der vorliegenden Erfindung wird eine Vorrichtung und ein Verfahren beansprucht, bei dem ein metallischer Gegenstand auf oder oberhalb einer Fahrbahn erkannt wird, welcher sich in Fahrtrichtung eines Fahrzeugs, z.B. eines Zweirads, befindet. Dabei sollen nicht nur metallische Gegenstände erkannt werden, die ein Hindernis, welches das Passieren der entsprechenden Stelle durch das Fahrzeug behindert, darstellen, sondern auch metallische Objekte, die ein Überfahren zunächst erlauben, jedoch aufgrund ihrer üblicherweise sehr glatten Oberfläche zu einer Gefährdung des Fahrzeugs führen können. So können als metallische Gegenstände beispielsweise sowohl oberhalb der Fahrbahn gespannte Drähte als auch ein in die Fahrbahn eingelassener metallischer Gegenstand, beispielweise ein Straßenbahngleis oder ein Kanaldeckel, erkannt werden. Das Erkennen des metallischen Gegenstands erfolgt dabei über die Erfassung von Zustandsinformationen der Fahrbahn sowie des Bereichs oberhalb er Fahrbahn, jeweils in Fahrtrichtung. Hierdurch kann erkannt werden, ob sich auf oder oberhalb der Fahrbahn ein metallischer Gegenstand befindet. In Abhängigkeit eines derartigen für die Fahrt gefährlichen Objekts wird eine Warnung an den Fahrer des Fahrzeugs ausgelöst.

Dadurch wird es dem Fahrer des Fahrzeugs ermöglicht, rechtzeitig auf den metallischen Gegenstand zu reagieren, indem er beispielsweise die Geschwindigkeit des Fahrzeugs reduziert oder die Fahrtroute ändert.

Metallische Oberflächen stellen insbesondere dann eine Gefahr dar, wenn die Fahrbahn zusätzlich feucht ist. Insbesondere für Zweiräder besteht bei Nässe beim Überfahren von metallischen Gegenständen eine erhöhte Sturzgefahr für den Fahrer. In einer bevorzugten Ausführung der Erfindung ist daher vorgesehen, in Abhängigkeit der Zustandsinformationen Feuchtigkeit auf der Fahrbahn in Fahrtrichtung des Fahrzeugs zu erkennen. Wird Feuchtigkeit erkannt, kann der Fahrer entsprechend gewarnt werden.

Für die Erfassung der Zustandsinformationen der Fahrbahn und des Bereichs oberhalb der Fahrbahn können insbesondere Radarsensoren verwendet werden. Mit den Radarsensoren lassen sich auch bei schlechten Witterungs- und Sichtverhältnissen Fahrbahnen in einer weiten Entfernung abtasten. Metallische Objekte haben die Eigenschaft, Radarsignale sehr effizient zu reflektieren, so dass metallische Gegenstände mit hoher Zuverlässigkeit erfasst werden und als solche identifiziert werden können. Diese starken Reflektionen werden von der Empfangsantenne des Radarsensors empfangen und können weiter verarbeitetet werden. Aus den empfangenen Signalen können Information über die Position der Quelle der erhöhten Reflektion und die sich daraus erschließende Geometrie des erfassten metallischen Gegenstands generiert werden. Die Geometrie und Information über die Fahrbahnbeschaffenheit bietet die Möglichkeit, auf ein erhöhtes Gefahrenpotential rückzuschließen. Durch Auswertung der erfassten Radarsignale kann außerdem Feuchtigkeit auf der Fahrbahn erkannt werden, da Wasser ebenfalls zu einer charakteristischen Reflexion der Radarwellen führt.

Alternativ oder zusätzlich kann die Erfassung von Feuchtigkeit über eine zusätzliche Sensorik erfolgen. Wird Feuchtigkeit über eine zusätzliche Sensorik erfasst, kann damit ein Ergebnis einer Radarmessung überprüft bzw. plausibilisiert werden. Als zusätzliche Sensorik kommen beispielsweise Reflexions-Photometer in Frage, welche durch Spektralanalyse ebenfalls berührungslos die Feuchtigkeit von Feststoffen erkennen können. Diese arbeiten mit Licht im nahen Infrarotbereich (NIR), also mit einer Wellenlänge von 700 bis ca. 2500 Nanometern.

Die Warnung kann einerseits über das sich bereits an dem Elektrofahrrad vorhandene Bedienelement (HMI) erfolgen, oder aber über alternative Systeme. Die Warnung kann dann optisch, akustisch oder haptisch erfolgen.

Die so erhaltenen Informationen über die erkannten metallischen Gegenstände können dem Fahrer zusätzlich auch auf einem Display angezeigt werden. Optional ist auch möglich, dass dem Fahrer über eine haptische Rückmeldung ein vorausliegender metallischer Gegenstand mitgeteilt wird. Dies kann beispielsweise durch eine Lenkervibration erfolgen. Eine weitere Möglichkeit besteht darin, dem Fahrer durch eine akustische Rückmeldung auf den metallischen Gegenstand aufmerksam zu machen.

Zusätzlich oder alternativ kann in Abhängigkeit eines erkannten metallischen Gegenstandes ein Beleuchtungsmittel angesteuert werden, welches den metallischen Gegenstand beleuchtet. Dadurch kann der Fahrer besonders bei Dunkelheit intuitiv erkennen, von welchem Bereich der Fahrbahn bzw. von wo im Bereich oberhalb der Fahrbahn eine besondere Gefahr ausgeht und kann beispielsweise sein Fahrverhalten, die Geschwindigkeit oder die Fahrtroute entsprechend anpassen. Als Beleuchtungsmittel kann z.B. ein an dem Fahrzeug befindliches Beleuchtungsmittel verwendet werden, welches die oben genannten Eigenschaften zur speziellen Ausleuchtung innerhalb der üblichen Beleuchtung aufweisen muss. Alternativ kann auch ein separates Beleuchtungsmittel vorgesehen sein, z.B. integriert in die erfindungsgemäße Vorrichtung.

Zusätzlich oder alternativ kann in Abhängigkeit eines erkannten metallischen Gegenstandes, eine Berechnung und Anzeige eines Ausweichwegs durchgeführt werden. Die Anzeige des Ausweichweges kann beispielsweise auf einem Display erfolgen oder durch Projektion z.B. eines Weges oder eines oder mehrerer Pfeile auf dem Boden.
Prinzipiell kann die erfindungsgemäß Vorrichtung bzw. das Verfahren bei allen Fahrzeugen Verwendung finden. Besonders vorteilhaft ist die Erfindung jedoch bei der Anwendung an oder in einem Motorrad, einem Fahrrad oder jedem anderen Zweirad, da hier die Fahrt über einen glatten Untergrund oft mit einem Sturz oder einem Unfall verbunden ist. So kann die Vorrichtung am Lenker befestigt sein oder in diesen integriert sein, um einen möglichst hohen Punkt zur Erfassung der vorausliegenden Fahrbahn zu erhalten. Optional kann die Vorrichtung auch an einem Helm befestigt werden.

Weitere Vorteile ergeben sich aus der nachfolgenden Beschreibung von Ausführungsbeispielen bzw. aus den abhängigen Patentansprüchen.

### Kurze Beschreibung der Zeichnungen

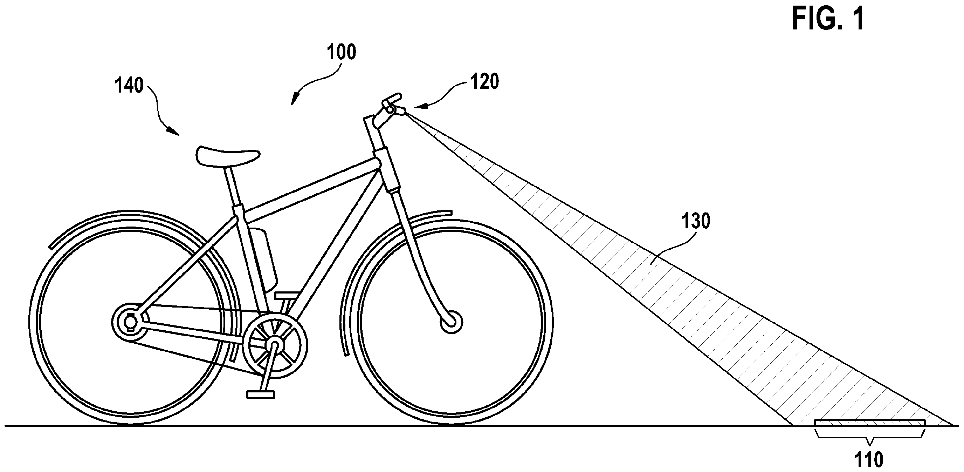

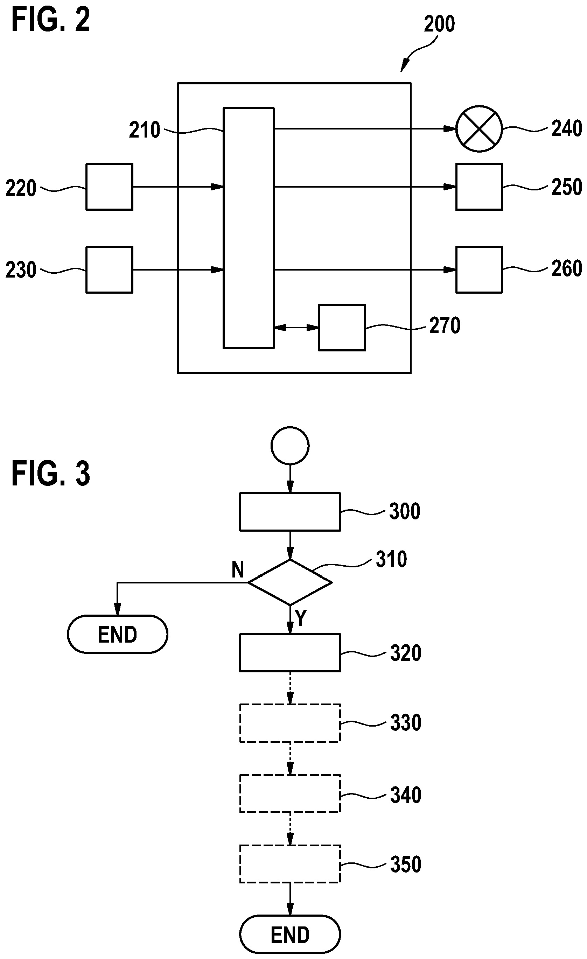

Figur 1 zeigt eine Übersicht der Erfindung. In der Figur 2 wird ein Blockschaltbild einer erfindungsgemäßen Vorrichtung dargestellt während Figur 3 eine mögliche Ausführung der Erfindung im Rahmen eines Verfahrens zeigt.

### Ausführungsbeispiele der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

In der Figur 1 wird die Erfindung am Beispiel eines Fahrrads 100, z.B. eines Elektrofahrrads, beschrieben. Es soll jedoch deutlich darauf hingewiesen werden, dass die Erfindung auch bei jedem anderen Fahrzeug, insbesondere jedem anderen Zweirad verwendet werden kann.

Während das Fahrrad 100 die Fahrbahn befährt, erfasst ein Sensor 120, z.B. ein Radarsensor, den in Fahrtrichtung befindlichen Abschnitt der Fahrbahn im Bereich 130. Wird aufgrund dieser Sensordaten ein metallischer Gegenstand erkannt, z.B. ein Kanaldeckel 110, erfolgt eine Warnung an den Fahrer, zum Beispiel über das sich bereits an dem Elektrofahrrad vorhandene HMI (Human-Machine-Interface).

Zusätzlich kann vorgesehen sein, dass durch den Sensor 120 erfasst wird, ob Feuchtigkeit auf der Fahrbahn vorliegt. Wird Nässe detektiert, zusätzlich oder alternativ zur Erfassung eines metallischen Gegenstands, kann eine entsprechend modifizierte Warnung an den Fahrer ausgegeben werden.

Ein mögliches Ausführungsbeispiel der erfindungsgemäßen Vorrichtung ist in Figur 2 schematisch dargestellt. Die Steuereinheit 200 weist dabei eine Verarbeitungseinheit 210 auf, die mit wenigstens einem Sensor 220 verbunden ist. Dieser Sensor 220 kann dabei als Radarsensor ausgebildet sein. Der Sensor 220 ist dabei dafür vorgesehen, Zustandsinformationen über die vorausliegende Fahrbahn in Fahrtrichtung zu erfassen. Diese Zustandsinformationen können dabei sowohl die Beschaffenheit der Fahrbahn als auch Gegenstände umfassen, die auf der Fahrbahn liegen. Die Verarbeitungseinheit 210 ist dazu eingerichtet, die Zustandsinformationen des Sensors 220 derart aufzubereiten, dass metallische Gegenstände sowie Feuchtigkeit auf der Fahrbahn erkannt werden. Hierzu kann auch ein Speicher 270 vorgesehen sein, der als Datenbasis dient. Wird ein Hindernis und somit eine Gefahr für die Fahrt erkannt, wird eine Warnung an den Fahrer ausgegeben.

Zusätzlich kann vorgesehen sein, dass der metallische Gegenstand oder ein Hinweis auf diesen auf einem Display 240 des Fahrrads angezeigt wird, z.B. einem Tacho oder einer Bedieneinheit (HMI) eines Elektrofahrrads. Optional kann vorgesehen sein, dass der Hinweis an den Fahrer über ein in Fahrtrichtung befindliches Hindernis auch über eine haptische Einrichtung 260 oder ein akustisches Signal erfolgt. Als haptische Rückmeldung könnte beispielsweise ein Vibrieren des Lenkers oder eines anderen Teils des Fahrrads genutzt werden.

Wird ein metallischer Gegenstand in der Verarbeitungseinheit 210 erkannt, so kann in einer besonderen Ausgestaltung der Erfindung auch eine spezifische Beleuchtung des Gegenstands durch ein Beleuchtungsmittel 250 ausgeführt werden. Zusätzlich kann ein Ausweichweg berechnet und zusätzlich auf dem Display 240 angezeigt werden.

Anhand des Flussdiagramms in Figur 3 soll das erfindungsgemäße Verfahren beschrieben werden. Nach dem Start des Verfahrens werden in einem Schritt 300 zunächst die Sensordaten des Radarsensors eingelesen. Optional können in diesem Schritt 300 auch die Sensordaten von mehreren, auch unterschiedlich ausgebildeten Sensoren erfasst werden, deren Erfassungsbereiche sich überlappen oder sich ergänzen. Hierdurch wäre eine Plausibilisierung der Sensordaten und/oder eine Abdeckung eines größeren Bereichs der Fahrbahn möglich. Im nächsten Schritt 310 wird aufgrund der eingelesenen Sensordaten erkannt, ob eine Gefährdung durch einen metallischen Gegenstand auf der Fahrbahn oder im Bereich oberhalb der Fahrbahn in Fahrtrichtung vorliegt und/oder ob die Fahrbahn Feuchtigkeit aufweist. Ist das nicht der Fall, kann das Verfahren beendet oder mit dem Einlesen der Sensordaten im Schritt 300 weiterverfolgt werden.

Bei der Erkennung eines metallischen Gegenstands bzw. einer Gefahr wird im nachfolgenden optionalen Schritt 320 eine entsprechende Warnanzeige in einem Display des Fahrrads angezeigt, um den Fahrer auf das Hindernis bzw. die Gefahr hinzuweisen.

Anschließend wird optional im Schritt 330 mittels des Beleuchtungsmittels der erkannte metallische Gegenstand beleuchtet, zum Beispiel in einer Signalfarbe, mit einer Farbe, mit der sich das Hindernis vom Untergrund unterscheiden lässt oder mit einem Warnsymbol.

Im nächsten optionalen Schritt 340 kann eine Berechnung und Anzeige eines Ausweichwegs vorgesehen sein, mittels dem der metallische Gegenstand umfahren werden kann. Dies kann ebenfalls mit dem Beleuchtungsmittel auf der Fahrbahn erfolgen. Alternativ kann auch eine akustische Warnung vorgenommen werden. Darüber hinaus kann der Ausweichweg auch in einem Display des Tachos oder einer Bedieneinheit des Elektrofahrrads angezeigt werden.

Ebenfalls optional ist der letzte Schritt 350, bei dem eine haptische Rückmeldung an den Fahrer erzeugt wird, um ihn auf den metallischen Gegenstand aufmerksam zu machen. Dies kann beispielsweise dadurch geschehen, dass eine Vibrationseinheit im Lenker angesteuert wird, durch den eine entsprechende Vibration auf die Griffe eingespielt wird. Es ist jedoch auch möglich, über die Pedale oder den Sitz haptische Rückmeldungen zu geben. Bei der Verwendung eines Elektrofahrrads ist auch die Ansteuerung des Motors in Abhängigkeit des erkannten Hindernisses möglich, um beispielsweise den Antrieb zu reduzieren und so eine Bremsung durch den Fahrer zu ermöglichen. Optional ist auch ein automatisierter Eingriff direkt auf die Bremse möglich.

## Patentansprüche

1. Vorrichtung zur Erkennung eines metallischen Gegenstands auf oder oberhalb einer Fahrbahn in Fahrtrichtung eines Fahrzeugs, insbesondere eines Zweirads (100), mit einer Steuereinheit (200), wobei die Steuereinheit (200) eingerichtet ist wenigstens Zustandsinformationen über die Fahrbahn und den Bereich oberhalb der Fahrbahn in Fahrtrichtung zu erfassen und in Abhängigkeit der Zustandsinformationen einen metallischen Gegenstand (110) zu erkennen, wobei die Steuereinheit (200) in Abhängigkeit eines erkannten metallischen Gegenstands (110) eine Warnung an den Fahrer des Fahrzeugs ausgelöst wird.

2. Vorrichtung nach Anspruch 1 **dadurch gekennzeichnet, dass** die Steuereinheit (200) eingerichtet ist, in Abhängigkeit der Zustandsinformationen Feuchtigkeit auf der Fahrbahn in Fahrtrichtung des Fahrzeugs zu erkennen.

3. Vorrichtung nach einem der Ansprüche 1 oder 2 **dadurch gekennzeichnet, dass** die Steuereinheit (200) die Zustandsinformationen der Fahrbahn und des Bereichs oberhalb der Fahrbahn mittels eines Radarsensors (120, 220) erfasst.

4. Vorrichtung nach einem der Ansprüche 2 oder 3 **dadurch gekennzeichnet, dass** die Steuereinheit (200) Feuchtigkeit mittels eines weiteren Sensors, insbesondere eines Reflexions-Photometers, erfasst.

5. Vorrichtung nach einem der vorhergehenden Ansprüche, **dadurch gekennzeichnet, dass** die Steuereinheit (200) eingerichtet ist, bei Erkennung eines metallischen Gegenstands ein Mittel (260) anzusteuern, mittels dem eine haptische und/oder eine akustische Rückmeldung an den Fahrer des Fahrzeugs erfolgt.

6. Vorrichtung nach einem der vorhergehenden Ansprüche, **dadurch gekennzeichnet, dass** die Steuereinheit (200) eingerichtet ist, bei Erkennung eines metallischen Gegenstands (110) dem Fahrer des Fahrzeugs den metallischen Gegenstand (110) auf einem Display (240) anzuzeigen.

7. Vorrichtung nach einem der Ansprüche 2 bis 6, **dadurch gekennzeichnet, dass** die Steuereinheit (200) eingerichtet ist, bei Erkennung von Feuchtigkeit ein zusätzliches haptisches und/oder akustisches und/oder visuelles Warnsignal an den Fahrer des Fahrzeugs auszugeben.

8. Vorrichtung nach einem der Ansprüche 1 bis 7, **dadurch gekennzeichnet, dass** die Steuereinheit (200) eingerichtet ist in Abhängigkeit eines erkannten metallischen Gegenstandes (110) ein Beleuchtungsmittel (250) anzusteuern, welches den metallischen Gegenstand (110) beleuchtet.

9. Vorrichtung nach einem der Ansprüche 1 bis 8, **dadurch gekennzeichnet, dass** die Steuereinheit (200) eingerichtet ist in Abhängigkeit eines erkannten metallischen Gegenstandes (110), eine Berechnung und Anzeige eines Ausweichwegs durchzuführen.

10. Verfahren zur Erkennung eines metallischen Gegenstands auf oder oberhalb einer Fahrbahn in Fahrtrichtung eines Fahrzeugs, insbesondere eines Zweirads (100), welches in einer Vorrichtung nach einem der vorhergehenden Ansprüche 1 bis 9 abläuft, umfassend die Schritte
- Erfassung von Zustandsinformationen über die Fahrbahn und den Bereich oberhalb der Fahrbahn in Fahrtrichtung, und
- Erkennen eines metallischen Gegenstands (110) in Abhängigkeit von den erfassten Zustandsinformationen,
wobei, in Abhängigkeit eines erkannten metallischen Gegenstands (110) eine Warnung an den Fahrer des Fahrzeugs ausgelöst wird.

11. Verfahren nach Anspruch 10, **dadurch gekennzeichnet, dass** in einem weiteren Schritt in Abhängigkeit der Zustandsinformationen Feuchtigkeit auf der Fahrbahn in Fahrtrichtung des Fahrzeugs erkannt wird.

12. Verfahren nach einem der Ansprüche 10 oder 11, **dadurch gekennzeichnet, dass** bei einem erkannten metallischen Gegenstand an den Fahrer des Fahrzeugs eine visuelle und/oder haptische und/oder akustische Warnung erfolgt.

13. Verfahren nach einem der Ansprüche 11 oder 12, **dadurch gekennzeichnet, dass** bei erkannter Feuchtigkeit an den Fahrer des Fahrzeugs eine zusätzliche visuelle und/oder haptische und/oder akustische Warnung erfolgt.

14. Verfahren nach einem der Ansprüche 10 bis 13, **dadurch gekennzeichnet, dass** in Abhängigkeit eines erkannten metallischen Gegenstandes (110), ein Ausweichweg berechnet und angezeigt wird.
